# EUROPEAN PATENT SPECIFICATION

(11) **EP 3 449 487 B1**
(45) Date of publication and mention of the grant of the patent: **14.10.2020**
(21) Application number: 16723034.1
(22) Date of filing: 25.04.2016
(51) Int. Cl.: G21C 19/00, G21C 19/10, G21C 19/105

(54) **SAFETY SYSTEM FOR SECURING A FUEL ASSEMBLY DURING A TRANSPORT WITH A FUEL ASSEMBLY HANDLING MACHINE**
SICHERHEITSSYTEM ZUM ABSICHERN EINES KERNBRENNSTOFFBÜNDELS WÄHREND DES TRANSPORTES MIT EINER KERNBRENNSTOFFBÜNDEL-TRANSPORTVORRICHTUNG
SYSTÈME DE SÉCURITÉ POUR SÉCURISER UNE ASSEMBLAGE DE COMBUSTIBLE NUCLÉAIRE PENDANT LE TRANSPORT AVEC UN DISPOSITIF DE MANUTENTION POUR DES ASSEMBLAGES DE COMBUSTIBLE NUCLÉAIRES

(43) Date of publication of application: 06.03.2019
(73) Proprietor: Framatome GmbH, 91052 Erlangen (DE)
(72) Inventor: WIESE, Thomas Heinz, 91301 Forchheim (DE); MARREIROS CAETANO, Tomas, 90765 Fürth (DE); ALAZ, Zafer, 91088 Bubenreuth (DE); PROBST, Christof, 90429 Nürnberg (DE); MEIER-HYNEK, Konrad, 91074 Herzogenaurach (DE); LEMM, Andreas, 90427 Nürnberg (DE); SEIBT, Manfred, 91099 Poxdorf (DE); STEGER, Georg, 91352 Hallerdorf (DE); HOCHHEIM, Sebastian, 90587 Tuchenbach (DE)
(74) Representative: Lavoix
(86) International application number: PCT/EP2016/059208
(87) International publication number: WO 2017/186266

(56) References cited:
- AT-B- 356 769
- DE-A1- 2 253 232
- FR-A1- 2 192 057
- FR-A1- 2 964 781

## Description

The invention relates to a safety system for securing a fuel assembly during a transport with a fuel assembly handling device.

For transporting fuel assemblies in nuclear plants, in particular in nuclear power plants fuel assembly handling devices are used, which comprise a gripper for gripping an upper end of the fuel assembly. The gripper is attached to a lifting and transfer unit, for example a crane, via a telescopic or rigid mast in order to move the gripper in a vertical and/or a horizontal direction with or without a fuel assembly. During its transport, for example from a reactor of a nuclear power plant to a spent fuel pool, the fuel assembly is handled in an upright position, thus the fuel assembly is oriented in a vertical direction.

During this transport, there is a risk that the structure, thus the supporting structure respectively the fuel assembly skeleton that keeps the configuration of the individual fuel rods of fuel assemblies or the fuel element itself or one of the individual fuel rods, is damaged or may fail during the handling. Even the gripper may have a malfunction so that the fuel assembly may be at least partially released. Furthermore, technical malfunction of the fuel assembly handling device, wrong handling of the staff or design failures in the combination of fuel assembly and gripper, may occur. All these abovementioned failures may lead to an at least partially or complete fall down of the fuel assembly.

By using known constructions of fuel assembly handling devices, all these abovementioned failures would lead to a complete fall down of the fuel assembly, so that the structure of the fuel assembly or its encasement and the surroundings, for example the fuel pool storage rack, fuel pool liner or parts of the reactor would be massively damaged, what would result in a long downtime. Even the fuel assembly handling device might be damaged. A further problem that occurs in this case is that the fuel assembly which has fallen down has to be set upright again and to be prepared for further treatment.

The document EP 2 617 040 B1 discloses a device for dry handling of nuclear fuel assemblies that comprises a transfer basket, wherein a bottom of the transfer basket is provided with valves being pivotable between an open and a closed position.

It is an object of the invention to provide a safety system for securing a fuel assembly during a transport in nuclear plants, in particular in nuclear power plants, further particularly for the use in nuclear power plants with pressurized and boiling water reactors as well as in nuclear power plants with water water reactors (Russian type), that prevents a fall down of the fuel element during the transport and/or a further damage of the fuel element and/or the fuel assembly handling device.

The object of the present invention is achieved by a safety system according to claim 1. A safety system for securing a fuel assembly during a transport with a fuel assembly handling device according to the present invention comprises a safety device being provided to be attached to the fuel assembly handling device and to be arranged below the fuel assembly at least during the transport. The safety device is provided to alternate between a first state and a second state, wherein in the first state a passage of the fuel assembly and/or at least a part of the fuel assembly handling device through the safety device and/or laterally past the safety device is allowed and in the second state a passage of the fuel assembly through the safety device and/or laterally past the safety device is prevented. The safety system further comprises at least one damping element being provided to absorb energy resulting from a fall down, in particular a partial fall down of the fuel assembly. A complete fall down of the fuel assembly is prevented by the safety device in the second state. Nevertheless, in the case of failure of the fuel assembly or of a component of the fuel assembly handling device, the fuel assembly may at least partially fall down, thus drop down a short distance before this vertical movement is stopped by the safety device. Using one or more damping elements reduces the force that acts on the safety device and the fuel assembly handling device due to an at least partial fall down of the fuel assembly. A damping element is for example, a spring mechanism or any component being made of an energy absorbing material or an elastic material.

A fuel assembly handling device typically comprises a gripper for gripping an upper end of the fuel assembly and a lifting and transfer unit, such as a crane installed at a coordinate carriage, wherein the gripper is attached to a lifting unit via a telescopic or rigid mast in order to be moved in a vertical and/or a horizontal direction with or without a fuel assembly. For transporting a fuel assembly with such a fuel assembly handling device the gripper is moved to a position above the fuel assembly and then moved downwards in order to grip an upper end of the fuel assembly. Afterwards the gripper together with the fuel assembly is moved upwards and said fuel assembly is transported to its desired position.

The safety device may be attached directly or indirectly, for example by ropes or rods, to the fuel assembly handling device. According to the invention, the safety device is provided to be arranged, respectively to be positioned below the fuel assembly at least during its transport, thus the fuel assembly is positioned between the safety device and the fuel assembly handling device during its transport.

In the first state, the fuel assembly and/or at least a part of the fuel assembly handling device, in particular at least the gripper and if necessary a lower end of the fuel assembly handling device, namely a telescopic unit or lift arm that supports the gripper, are able to pass through or by the safety device. In other words: A vertical movement of said parts in an upwards direction, thus towards the fuel assembly loading machine, and in a downward direction, thus away from the fuel assembly loading machine, is allowed. The safety device is in that first state, during the gripper is moved to grip the fuel assembly and subsequently is moved upwardly together with the fuel assembly before the fuel assembly is transported and during the gripper is moved downwardly together with fuel assembly and during the gripper releases the fuel assembly at its end position after the transport.

In the second state, the fuel assembly and/or at least a part of the fuel assembly handling device cannot pass through or by the safety device. In other words: A vertical movement of said parts at least in a downward direction, thus away from the fuel assembly loading machine, is prevented. The safety device is in that second state at least during the fuel assembly is transported. As mentioned above the fuel assembly is arranged between the fuel assembly handling device and the safety device during its transport, so that a fall down of the fuel assembly is prevented. The safety device may also be in its second state, when the fuel assembly handling device is not in use, thus no fuel assembly is transported.

In summary, the idea of the invention is to prevent a fall down of the fuel assembly or at least to reduce the height of fall of the fuel assembly, by using a safety device that is arranged below the fuel assembly and is constructed in such a way, that it prevents the fuel assembly from passing through or by the safety device during the transport. Furthermore the at least one damping element dampens the partial fall down of the fuel assembly. Therefore a fall down of the fuel assembly in the case of fuel assembly failure and/or gripper failure and/or fuel assembly handling machine failure is reliably prevented, as the safety device restricts downwards movement of the fuel assembly. A further damage of the fuel assembly due to a partial fall down of said fuel element is prevented by the damping mechanism.

In order to allow passing through or by the safety device in its first state, it might be imaginable to remove the safety device completely or to provide a pivoting or rotating mechanism that would pivot or rotate the safety device to its first state, so that passing of the fuel assembly is possible. Preferably, the safety device comprises a first opening sized to allow passage of the fuel assembly and/or the at least one part of the fuel assembly handling device in the first state. Said opening is in particular a through opening. This has the advantage that the safety device itself has not be moved, thus no further components, such as hinges or the like have to be provided to allow passing through or by the safety device in the first state.

As mentioned above, the safety device is attached directly or indirectly to the fuel assembly handling device. Preferably the safety system therefore comprises at least one retaining element and/or at least one fastening element for attaching the safety device to a part of the fuel assembly handling device, in particular for fixing the safety device detachably to said part of the handling device. Said at least one retaining element is detachably fixed to the safety device with its first end and is detachably fixed to the fuel assembly handling device with its second end, for example by means of a screw connection, thus for example by usual fastening elements such as screws or the like, or by means of a form-fit connection. For example, said at least one retaining element is a rope, in particular a steel rope, and/or a rod and/or essentially plate-shaped component being attached with its lower surface to an upper surface of the safety device, whereby even combinations of several retaining elements may be used, being fixed to each other by usual fastening elements.

In a preferred embodiment, the safety device comprises a locking device being arranged at the safety device, wherein the locking device comprises at least one moveable part being moveable between a first and a second position in order to allow a passage of the fuel assembly and/or at least a part of the fuel assembly handling device through the safety device and/or passing by the safety device in the first state and to prevent a passage of the fuel assembly through the safety device and/or passing by the safety device in the second state. In particular, the locking device prevents passing of the fuel assembly and/or the at least one part of the fuel assembly handling device through the opening of the safety device.

In other words: The locking device, respectively its moveable part is moved from its first position to its second position in order to bring the safety device in its second state, so that passaging of the fuel assembly is prevented and is moved from its second position to its first position in order to bring the safety device in its first state, so that passaging of the fuel assembly and/or at least a part of the fuel assembly handling device is allowed. Thus, when the locking device, respectively its moveable part is in the first position, the safety device is in its first state and when the locking device, respectively its moveable part is in the second position, the safety device is in its second state. The locking device may be detachably fixed to the safety device by common means known by a person skilled in the art.

The at least one damping element may be provided at several positions within the safety system that are affected by an energy due to an at least partial fall down of the fuel assembly, for example between at least one of the retaining elements and the fuel assembly handling device or between two retaining elements. In a preferred embodiment, the at least one damping element or the two or more damping elements is respectively are arranged at an upper surface of the safety device or at an upper surface of the locking device, preferably the at least one damping element or the two or more damping elements is respectively are attached to or fixed to said upper surface of the safety device or to said upper surface of the locking device. In case of fall down of the fuel assembly, said fuel assembly may firstly fall onto the at least one damping element. In this case, the damping element(s) dampens the partial fall down of the fuel assembly, by deformation of the damping element(s) itself. In particular the at least one damping element is arranged between the safety device and the at least one retaining element, wherein said at least one damping element is at least attached to the safety device. Further speaking about damping element it could be one or more than one.

Further preferred is an embodiment, wherein at least one first damping element is attached to the safety device and to at least one of the retaining elements, so that the safety device and said retaining element are resiliently coupled with respect to each other. Therefore, the safety device as well as the at least one retaining element may be plate-shaped and arranged parallel and spaced apart to each other, enclosing a spring mechanism or another damping element between them. In this case, the retaining element may also be interpreted as being a part of the safety device. During the transport, the damping element is un-loaded, in case of a partial fall down of the fuel assembly, said fuel assembly falls directly on the safety device and/or the locking device. Thereby the damping element is loaded and absorbs energy resulting from the fall down. The distance between the safety device and the retaining element is varied, in particular increased, in case of fall down.

The object of the invention is further achieved by a safety system according to claim 7, in particular in combination with the features according to one of the claims 1 to 6. The safety system for securing a fuel assembly during a transport with a fuel assembly handling device according to the present invention comprises a safety device being provided to be attached to the fuel assembly handling device and to be arranged below the fuel assembly at least during the transport. The safety device is provided to alternate between a first state and a second state, wherein in the first state a passage of the fuel assembly and/or at least a part of the fuel assembly handling device through the safety device and/or laterally past the safety device is allowed and in the second state a passage of the fuel assembly through the safety device and/or laterally past the safety device is prevented. The safety system further comprises a lifting mechanism being provided to lift up the safety device in its second state so that the safety device and/or at least one damping element is in contact with a lower end of the fuel assembly or the distance between the safety device and/or the at least one damping element and the lower end of the fuel assembly is at least reduced.

According to this solution, the height of fall down, respectively drop of the fuel assembly is significantly reduced. The lifting mechanism is activated when the fuel assembly has passed through or by the safety device and the safety device is brought from its first to its second state. As the height of fall is at least reduced, in the case that at least one damping element, in particular at least one second damping element is provided that is in contact with the lower end or whose distance to the lower end is at least reduced, said damping element may be provided with a lower elasticity, as the force that acts on said damping element or the safety device and therefore the energy that has to be reduced is lowered.

In order to allow passing through or by the safety device in its first state, it might be imaginable to remove the safety device completely or to provide a pivoting or rotating mechanism that would pivot or rotate the safety device to its first state, so that passing of the fuel assembly is possible. Preferably, the safety device comprises a first opening sized to allow passage of the fuel assembly and/or the at least one part of the fuel assembly handling device in the first state. Said opening is in particular a through opening. This has the advantage that the safety device itself has not be moved, thus no further components, such as hinges or the like have to be provided to allow passing through or by the safety device in the first state.

As mentioned above, the safety device is attached directly or indirectly to the fuel assembly handling device. Preferably the safety system therefore comprises at least one retaining element and/or at least one fastening element for attaching the safety device to a part of the fuel assembly handling device, in particular for fixing the safety device detachably to said part of the handling device. Said at least one retaining element is detachably fixed to the safety device with its first end and is detachably fixed to the fuel assembly handling device with its second end, for example by means of a screw connection, thus for example by usual fastening elements such as screws or the like, or by means of a form-fit connection. For example, said at least one retaining element is a rope, in particular a steel rope, and/or a rod and/or essentially plate-shaped component being attached with its lower surface to an upper surface of the safety device, whereby even combinations of several retaining elements may be used, being fixed to each other by usual fastening elements.

In a preferred embodiment, the safety device comprises a locking device being arranged at the safety device, wherein the locking device comprises at least one moveable part being moveable between a first and a second position in order to allow a passage of the fuel assembly and/or at least a part of the fuel assembly handling device through the safety device and/or passing by the safety device in the first state and to prevent a passage of the fuel assembly through the safety device and/or passing by the safety device in the second state. In particular, the locking device prevents passing of the fuel assembly and/or the at least one part of the fuel assembly handling device through the opening of the safety device.

In other words: The locking device, respectively its moveable part is moved from its first position to its second position in order to bring the safety device in its second state, so that passaging of the fuel assembly is prevented and is moved from its second position to its first position in order to bring the safety device in its first state, so that passaging of the fuel assembly and/or at least a part of the fuel assembly handling device is allowed. Thus, when the locking device, respectively its moveable part is in the first position, the safety device is in its first state and when the locking device, respectively its moveable part is in the second position, the safety device is in its second state. The locking device may be detachably fixed to the safety device by common means known by a person skilled in the art.

According to a first advantageous embodiment of the locking device, the at least one moveable part is a rotatable plate, wherein said rotatable plate comprises a second opening sized to allow passage of the fuel assembly and/or at least a part of the fuel assembly handling device in the first position and to prevent passage of the fuel assembly and/or at least a part of the fuel assembly handling device in the second position. A cross-section of the second opening, respectively its opening size remains constant in the first and the second position. In particular, the second opening has a rectangular shape that is adapted to an outer shape of the usually rectangular shaped fuel assembly.

In other words: The opening size, respectively its cross-section is not changed or varied in its diameter and/or dimension comparing the first and the second position, thus during a movement, respectively a rotation of the moveable part, respectively the rotatable plate. On the contrary, the orientation of the opening relative to the fuel assembly is changed, when the rotatable plate is rotated between its first and second position in such a way, that the second opening is oriented to allow a passing of the fuel assembly and/or at least a part of the fuel assembly handing device in the first position and to prevent a passing of the fuel assembly in its second position. If the safety device is provided with a first opening, said first opening and the second opening of the locking device overlap, so that passing through both openings is allowed in the first state or prevented in the second state.

That means, the fuel assembly can pass through the second opening of the at least one moveable part, in particular the second opening of the rotatable plate, when said moveable part, respectively said rotatable plate is in the first position, that means when the safety device is in its first state. Thereby a narrow gap between the second opening and the fuel assembly may be provided in order to prevent a damage of the moveable part of the locking device during the fuel assembly is passed through.

According to an alternative preferred embodiment of the locking device, the at least one moveable part of the locking device is provided to increase or decrease a cross-section of the first opening, respectively the size of the first opening in order to allow passage of the fuel assembly and/or at least a part of the fuel assembly handling device in the first position and to prevent passage of the fuel assembly and/or at least a part of the fuel assembly handling device in the second position. In other words: The first opening is at least partially closed in order to bring the safety device in the second state and is at least partially opened in order to bring the safety device in the first state. The terms "partially closed" and "partially opened" are to be understood as closed and opened in a degree that is sufficient for allowing or preventing a passing of the fuel assembly and/or the part of the fuel assembly handling device. The first opening may also be closed and opened completely.

In particular, the safety system further comprises a transporting unit being detachably fixed to a part of the fuel assembly handling device, wherein the safety device and/or the at least one retaining element are adapted to said transporting unit. This means the safety device and/or the retaining element are indirectly attached to the fuel assembly handling device, namely via the transporting unit. The fuel assembly is surrounded by the transporting unit at least during the transport. Further, the transporting unit can be separated completely from the fuel assembly handling device, in particular together with the safety device and said retaining element. This has the advantage that a fuel assembly that has been damaged or shows anomalies can be transported to a set down position, and parked together with the transporting unit, so that the fuel assembly handling device can be used further for transporting further fuel assemblies during testing of the conspicuous fuel assembly.

In a preferred embodiment the transporting unit comprises at least one elongated element, in particular at least one tube or at least one or more rods, each having a first end that is attached to the safety device and/or the at least one retaining element and each having a second end that is attached directly or indirectly to a part of the fuel assembly handling device. The term "indirectly" is to be understood in that way, that further retaining elements, for example ropes, may be present between the transporting unit and the part of the fuel assembly handling device.

Preferably the transporting unit further comprises a guiding unit being detachably attached to a lower end of the fuel assembly handling machine, said guiding unit being arranged to be disposed along the at least one elongated element in a vertical direction. The lower end of the fuel assembly handling machine comprises in particular a moveable part, respectively a manipulator or a telescopic unit which carries the gripper. Therefore the guiding unit is moved together with the gripper in a vertical direction, whereby it is guided along the at least one elongated element. Once the elongated element is designed as a tube, the guiding unit may be guided within said tube along its inner wall. When the elongated element is designed as a rod, in particular at least two elongated elements may be provided on opposite sides of the guiding unit in order to ensure a stable movement. In this case, the guiding unit comprises in particular at least two openings, wherein the at least two elongated elements pass through said openings. In order to park the fuel assembly together with the transporting unit, for example in a set down position, the guiding unit is provided to be separated from the lower end of the fuel assembly handling machine. The guiding unit further stabilizes the transporting unit during the transport.

Preferably, the at least one elongated element comprises at least two portions being telescopically movable into each other. This enables a space-saving storage of the transporting unit, when it is not in use.

In particular, the transporting unit comprises at least one stabilizing element being provided to prevent tilting of the fuel assembly during the transport. Such a stabilizing element prevents a laterally fall out of the fuel assembly from the transporting unit in the case of failure of the gripper or another part of the fuel assembly handling device. Therefore the at least one stabilizing element is in particular at least partially arranged between the guiding unit and the safety device during a transport of the fuel assembly.

In particular, the at least one stabilizing element is attached to the guiding unit and/or the at least one elongated element and arranged to be disposed along the at least one elongated element in a vertical direction. Preferably, at least one first said stabilizing element is kept form-fitting at the guiding unit during a transport of the fuel assembly.

According to further preferred embodiment, the at least one second stabilizing element is a ring being attached to the transporting unit, in particular to at least one of the at least one elongated elements, and being arranged to be disposed along the transporting unit, in particular along the at least one elongated element in a vertical direction.

As both types of stabilizing elements, thus the first and the second stabilizing element, may be moved together with the guiding unit during gripping or releasing of the fuel assembly, a tilting of said fuel element is prevented during its vertical movement before and after the transport. Preferably, the safety system further comprises a drive mechanism, said drive mechanism being in particular completely or at least partially fixed to a part of the fuel assembly handling device and being provided to move the transporting unit, in particular the guiding unit and/or the safety device in a vertical direction. Therefore the transporting unit and/or the safety device are provided to be moved independently from the fuel assembly handling device, in particular independently from the gripper, in a vertical direction. During gripping and upward movement and/or during releasing and downward movement of the fuel assembly before and after the transport, the transporting unit and/or the safety device and the fuel assembly handling device, respectively the gripper, may be moved synchronously. The drive mechanism may further comprise means for activating or deactivating the locking device, thus for alternating the moveable part of the locking device between its first and its second position.

In order to ensure that in case of failure of individual components of the safety system, in particular the safety device, the locking device, the damping unit, the transporting unit and the drive mechanism, the safety system particularly comprises at least one emergency unlocking mechanism being provided to activate and/or deactivate the safety device and/or the locking device and/or the damping unit and/or the transporting unit and/or the drive mechanism.

Further preferred, the components of the safety system, in particular the safety device and/or the locking device and/or the retaining element and/or the transporting unit, in particular the guiding unit are provided to be mechanically removed by a manipulator. Such disassembling of the individual components of the safety system may even be carried out under water.

The invention will be described in further detail hereinafter with reference to the drawings being illustrated in a schematic manner, and in which
- FIG 1: shows a safety system,
- FIG 2: shows a safety device and at least one of the retaining elements in a perspective view,
- FIG 3: shows a safety device and a locking device in a perspective view,
- FIG 4a: shows a sectional view of a safety system and a locking device according to a first embodiment,
- FIG 4b: shows a top view of a safety system and the locking device along the line IV-IV in FIG 4a,
- FIG 5a: shows a sectional view of a safety system and a locking device according to a second embodiment,
- FIG 5b: shows a top view of a safety system and the locking device along the line V-V in FIG 4a,
- FIG 6a: shows a sectional view of a safety system and a locking device according to a third embodiment,
- FIG 6b: shows a top view of a safety system and the locking device along the line VI-VI in FIG 6a,
- FIG 6c: shows a sectional view according to FIG 6a in a perspective manner,
- FIG 7: shows different positions of the safety system and the fuel assembly handling device,
- FIG 8a: shows top view of a locking device according to FIG 6a to 6c and a fuel assembly in a simplified schematic view, wherein the locking device is in its first position,
- FIG 8b: shows top view of a locking device according to FIG 6a to 6c and fuel assembly in a simplified schematic view, wherein the locking device is in its second position,
- FIG 9a: shows top view of a locking device according to a fourth embodiment and a fuel assembly in a simplified schematic view, wherein the locking device is in its first position,
- FIG 9b: shows top view of a locking device according to FIG 9a and fuel assembly in a simplified schematic view, wherein the locking device is in its second position,
- FIG 10a: shows a sectional view of a safety device comprising a damping element in a simplified schematic view, wherein the safety device is in its first state,
- FIG 10b: shows a sectional view of a safety device comprising a damping element according to FIG 10a in a simplified schematic view, wherein the safety device is in its second state,
- FIG 10c: shows a sectional view of a safety device comprising a damping element according to FIG 10a and 10b in a simplified schematic view, wherein the safety device is in its second state and the damping element is loaded,
- FIG 11a: shows a sectional view of a safety device comprising a lifting mechanism in a simplified schematic view, wherein the safety device is in its first state,
- FIG 11b: shows a sectional view of a safety device comprising a damping element according to FIG 11a in a simplified schematic view, wherein the safety device is in its second state,
- FIG 11c: shows a sectional view of a safety device comprising a damping element according to FIG 11a and 11b in a simplified schematic view, wherein the safety device is in its second state and the damping element is in contact with a fuel assembly,
- FIG 12a: shows a sectional view of a safety device and a transporting unit according to a first embodiment in a simplified schematic view, wherein the safety device is in its first state,
- FIG 12b: shows a sectional view of a safety device and a transporting unit according to FIG 12a in a simplified schematic view, wherein the safety device is in its second state,
- FIG 13a: shows a sectional view of a safety device and a transporting unit according to a second embodiment in a simplified schematic view, wherein the safety device is in its first state,
- FIG 13b: shows a sectional view of a safety device and a transporting unit according to FIG 13a in a simplified schematic view, wherein the safety device is in its second state,
- FIG 14a: shows a sectional view of a safety device and a transporting unit according to a third embodiment in a simplified schematic view, wherein the safety device is in its first state,
- FIG 14b: shows a sectional view of a safety device and a transporting unit according to FIG 14a in a simplified schematic view, wherein the safety device is in its second state.

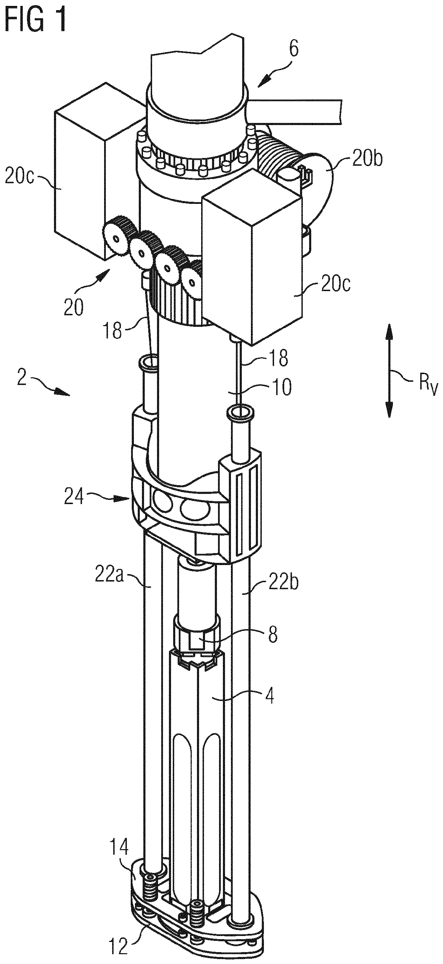

Fig. 1 shows a safety system 2 for securing a fuel assembly 4 during a transport with a fuel assembly handling device 6. The fuel assembly handling device 6 comprises a gripper 8 that is attached to a manipulator 10 in order to be moveable upwards and downwards in a vertical direction Rv.

The safety system 2 comprises a safety device 12 that is arranged below the fuel assembly 4 in Fig. 1, as Fig. 1 shows the safety system 2 during the transport. The safety device 12 is provided to alternate between a first state and a second state. In the first state a passage of the fuel assembly 4 and the gripper 8 and a lower part of the fuel assembly handling machine 6, namely a lower part of the manipulator 10 through the safety device 12 is allowed. In the second state a passage of the fuel assembly 4 through the safety device 12 is prevented.

The safety device 12 is attached indirectly to the fuel assembly handling device 6, namely via at least one first retaining element 14, exemplary a plate-shaped component, a transporting unit 16, exemplary comprising two elongated elements 22a, 22b formed as rods and a guiding unit 24, at least one second retaining element 18, exemplary two ropes, and a drive mechanism 20. The transporting unit 16, in particular exemplary each of the two elongated elements 22a, 22b, has a first end that is attached to the retaining element 14 and a second end, that is attached indirectly to a part of the fuel assembly handling device, namely is attached to second retaining elements 18. The transporting unit 16 is detachably fixed to the second retaining element 18 and thus detachably fixed to the fuel assembly handling device 6 so that it can be disassembled if necessary.

The guiding unit 24 of the transporting unit 16 is attached to a lower end of the fuel assembly handling machine 6, in particular the guiding unit 24 is attached to the manipulator 10, in order to be moved in a vertical direction together with said telescopic manipulator 10 and the gripper 8. The guiding unit 24 is further provided with two openings that extend in a vertical direction and through which the two elongated elements 22a, 22b are led, so that the guiding unit 24 is able to be disposed along the two elongated elements 22a, 22b in a vertical direction. Therefore, the guiding unit 24 stabilizes the transporting unit 16.

The drive mechanism 20 is fixed to a part of the fuel assembly handling device and provided to move the transporting unit 16 and the safety device in 12 a vertical direction. The drive mechanism 20 comprises a bearing structure 20a for mounting the drive unit 20 to the fuel assembly handling device 6, a cable drive unit 20b for guiding and moving lines (not shown), for example pneumatic lines that are provided to alternate the safety device 12 between the first and the second state and a further drive unit 20c being provided to move the retaining elements 18 and therefore the transporting unit 16 and the safety device 12 in a vertical direction.

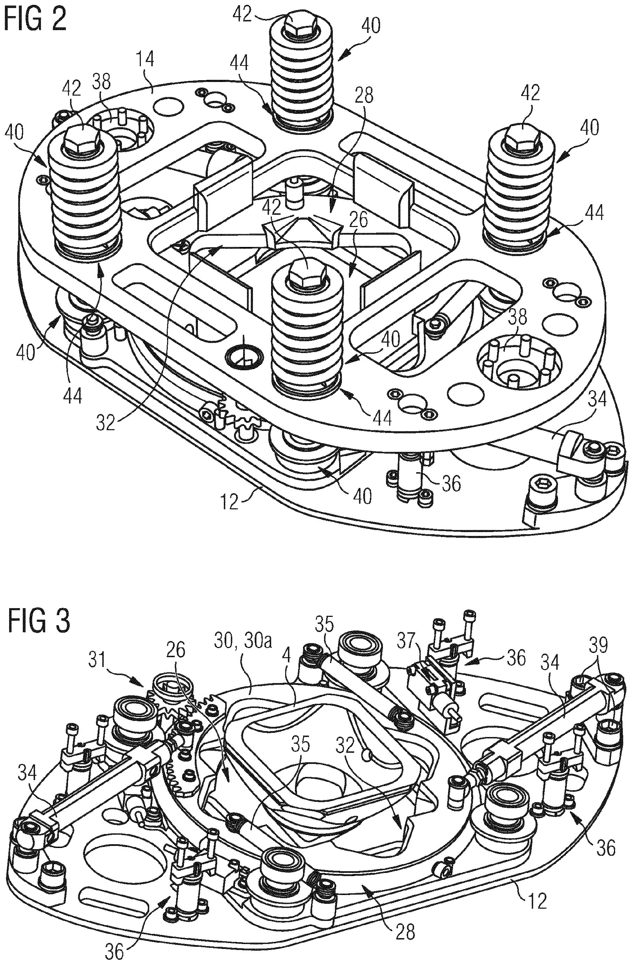

Fig. 2 shows a lower part of the safety system 2 according to Fig. 1, namely a safety device 12 and at least one of the retaining elements, in fact the retaining element 14 in a perspective view. The safety device 12 comprises a first opening 26 sized to allow passage of the fuel assembly 4 the gripper 8 and a lower part of the fuel assembly handling machine 6 in the first state. The safety device 12 further comprises a locking device 28 that is arranged on an upper surface of the safety device 12, as can be seen best in Fig. 3, in which the retaining element 14 is not illustrated.

The locking device 28 comprises at least one moveable part 30 being moveable between a first and a second position in order to allow a passage of the fuel assembly 4 and the gripper 8 and a lower part of the fuel assembly handling machine 6 through the safety device 12 in the first state. Therefore the moveable part 30 also comprises an opening, in fact a second opening 32 that is aligned with the first opening 26 of the safety device 12 in the first state and disaligned with the first opening 26 in the second state in order to prevent a passage of the fuel assembly 4 and the gripper 8 and a lower part of the fuel assembly handling machine 6 through the safety device in the second state. According to Fig. 2 and 3, the moveable part 30 is a rotatable plate 30a comprising the second opening 32. For rotating the moveable part 30, respectively the rotatable plate 30a, shifting mechanics 34 such as pneumatic cylinders, exemplary two pneumatic cylinders, are provided and attached to the safety device 12 and coupled to the rotatable plate 30a. The locking device 28, in particular the moveable part 30, namely the rotatable plate 30a is further coupled to an emergency unlocking mechanism 35, exemplary designed as two return springs 35. This is in particular advantageous when singleacting cylinders are used. In the case of a pressure drop, the locking device 28, in particular the moveable part 30 would be closed. A further emergency unlocking mechanism 31 may be provided to activate and/or deactivate and/or remove the locking device 28. The retaining element 14 comprises fastening elements 38 for being fixed to the transporting unit 16, in particular to the two elongated elements respectively rods 22a, 22b.

The safety system 2 further comprises a damping unit with at least one damping element, exemplary four damping elements 40 that are provided to absorb energy resulting from a fall down of the fuel assembly 4. According to Fig. 2, the damping elements 40 are arranged at an upper surface of the safety device 12 and attached to said surface as well as to the retaining element 14, so that the safety device 12 and the retaining element 14 are resiliently coupled with respect to each other. Therefore the retaining element 14 is provided with openings 44, exemplary four openings through which in each case a pin (not visible) being connected to the upper surface of the safety device 12 protrudes. Above the retaining element 14, each of the pins is surrounded by a damping element 40, exemplary a spring. An emergency unlocking mechanism for separating the safety device 12 is provided, exemplary designed as screws 42 that are provided at the damping elements 40 and may be removed by a manipulator even under water. The safety system 2 shown in Fig. 2 may additionally or alternatively comprise a lifting mechanism. The safety device 12 further comprises a spring mechanism 36, that preloads the damping elements 40 for balancing flow resistance during the movement. When the load being applied to the locking device 28 respectively the safety device 12 exceeds a certain limit, the safety device 12 is moved vertically and relative to the retaining element 14, and a position limit switch 37 is activated.

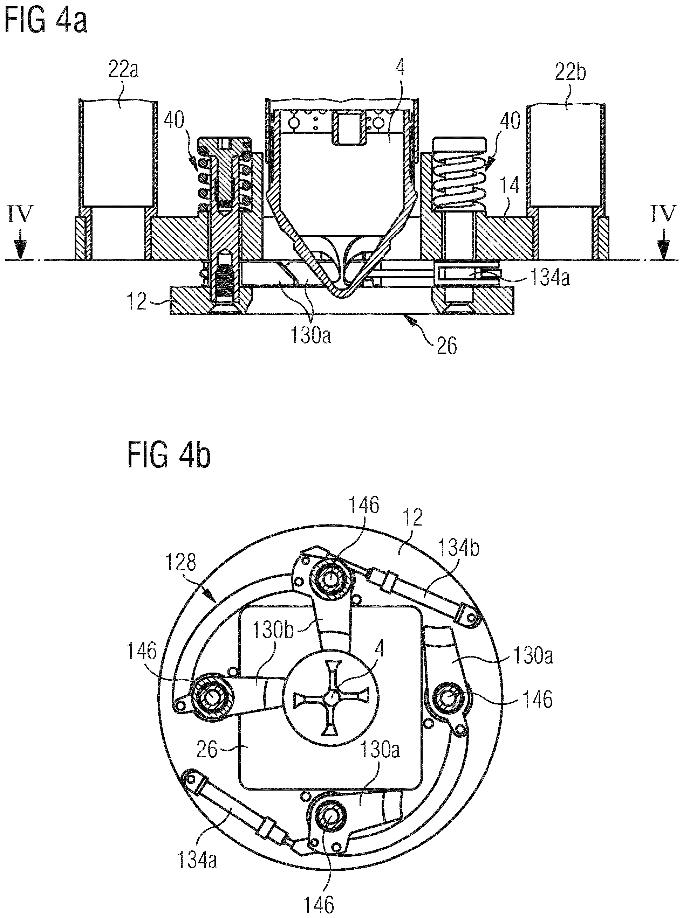

Fig. 4a and 4b show a first embodiment of a locking device 128 that is arranged on the safety device 12, wherein the safety device 12 is in its second state. The locking device 128 comprises exemplary four moveable parts 130a, 130b, exemplary constructed as handles, wherein two of the moveable parts 130a that are connected to one shifting mechanic 134a, exemplary a pneumatic cylinder, are in their first position and two of the moveable parts 130b that are connected to one shifting mechanic 134b, exemplary a pneumatic cylinder, are in their second position, thus closing the first opening 26 being provided in the safety device 12. The moveable parts 130a, 130b are each attached pivotable to the safety device 12 by a rotating joint 146. According to this embodiment, the cross-section of the first opening 26, respectively the opening size is decreased respectively reduced by the two moveable parts 130b that are in their second position, in order to prevent passage of the fuel assembly 4 through the opening 26.

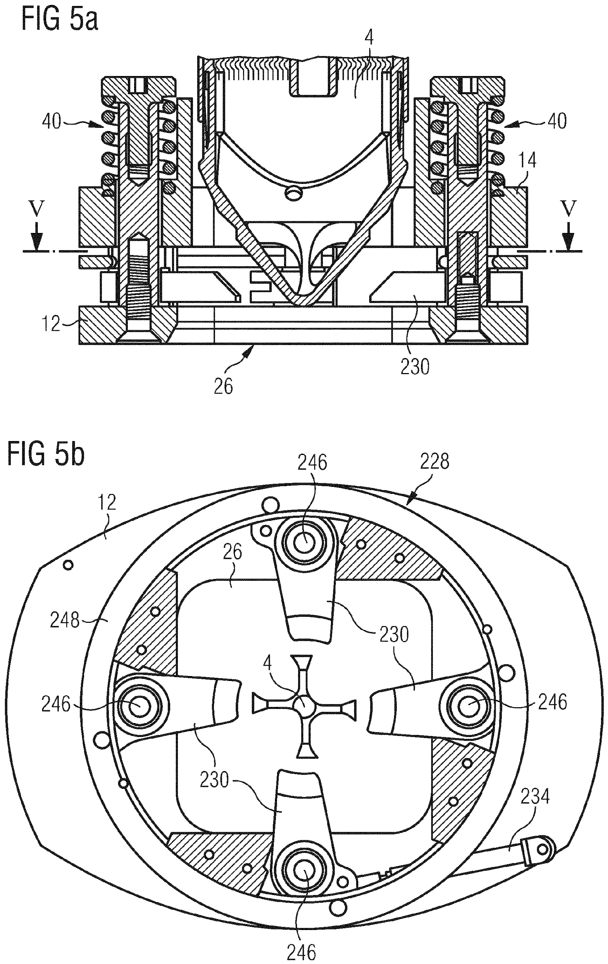

Fig. 5a and 5b show a second embodiment of a locking device 228 that is arranged on the safety device 12, wherein the safety device 12 is again in its second state. The locking device 228 also comprises exemplary four moveable parts 230 such as handles, wherein all of the moveable parts 230 are attached to a moveable, respectively rotatable ring 248 that is connected to one shifting mechanic 234, exemplary a pneumatic cylinder. All of the moveable parts 230 are in their second position, thus closing the first opening 26 being provided in the safety device 12. The moveable parts 230 are also attached pivotable to the safety device 12 by a rotating joint 246. Even according to this embodiment, the cross-section of the first opening 26, respectively the opening size is further decreased respectively reduced by the four moveable parts 230 that are in their second position, in order to prevent passage of the fuel assembly 4 through the opening 26.

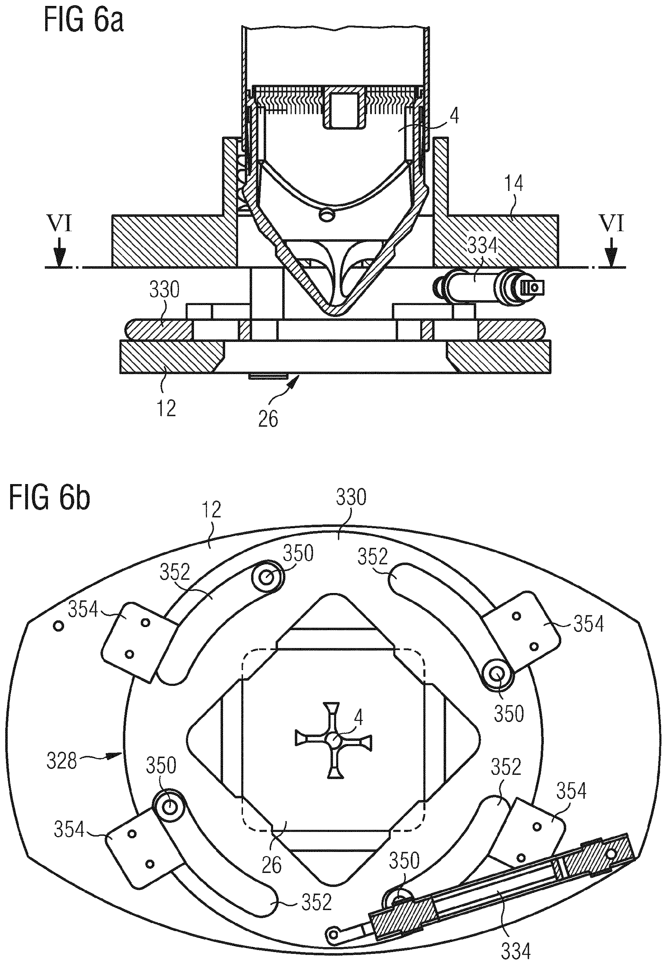

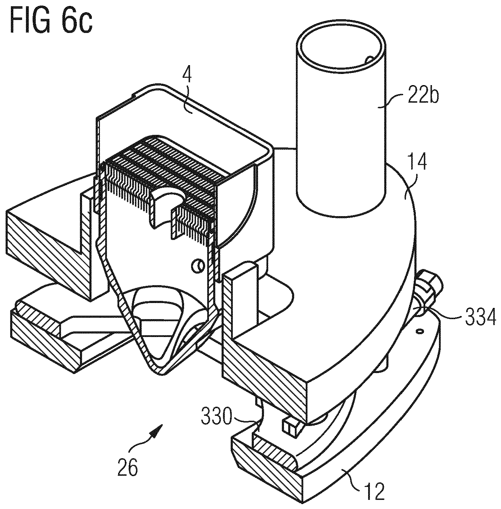

Fig. 6a, 6b and 6c show a third embodiment of a locking device 328 that is arranged on the safety device 12, wherein the first state of the safety device 12 respectively the first position of the locking device 328 is illustrated with dashed lines and the second state of the safety device 12 respectively the first position of the locking device 328 is illustrated with continuous lines. The locking device 328 comprises a moveable part 330 that is designed as a rotatable plate respectively a rotatable disc. The moveable part 330 is attached to an upper surface of the safety device 12. For rotating the moveable part 330, said part 330 is connected to a shifting mechanism 334, again a pneumatic cylinder, wherein said shifting mechanism 334 is also fixed to an upper surface of the safety device 12. For guiding the moveable part 330 during a rotation, guiding elements 350, exemplary designed as four guiding roles and fixed to the safety device 12 may be provided to allow sliding of curved slits 352 being provided in the moveable part 330 along these guiding elements 350. Additionally or instead of these guiding elements 350 designed as roles, further guiding elements 354, exemplary four guiding elements 354 may be attached to the safety device 12 which overlap the moveable part 330 at least partially in an edge region, so that movement of the moveable part 330 in a radial direction is prevented.

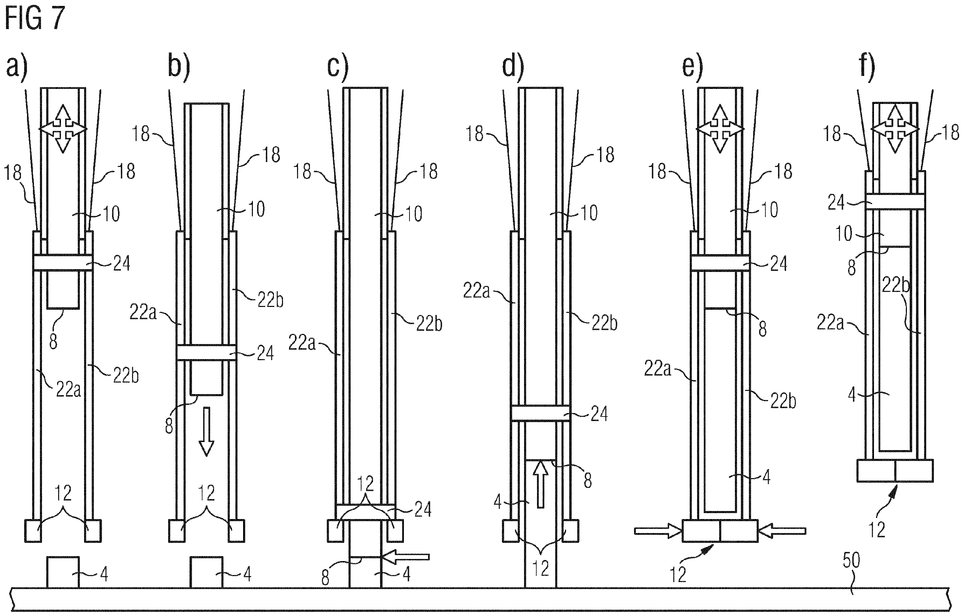

Fig. 7 shows different positions of the safety system and the fuel assembly handling device, in order to explain at which time during the transport the safety device 12 is in its first state or its second state. The fuel assembly 4 is exemplary stored in a spent fuel storage rack 50. Alternatively, for the transport of fuel assemblies being stored in a reactor vessel, a transport casc, a storage casc or the like, the safety system 2 might be used.

In a first step (step a)) the fuel assembly handling machine 6 is positioned above the fuel assembly 4 that has to be transported by moving the fuel assembly handling machine 6. Afterwards (step b)) the moveable part of the fuel assembly handling machine, in particular the manipulator 10 that supports the gripper 8 is moved downward in a vertical direction so that the gripper 8 approaches the fuel assembly 4. Having reached the fuel assembly 4, the gripper 8 grips and fixes the fuel assembly 4, wherefore the gripper 8 is provided with usual gripping mechanism. In a further step (step d)), the manipulator 10, the gripper 8 and the fuel assembly 4 are together moved upward in a vertical direction for extracting the fuel element from the spent fuel storage rack 50. During all these abovementioned steps a) to d), the safety device 12 is in its first state to allow passing of the fuel assembly 4, a part of the manipulator 10 and the gripper 8. Furthermore, the two elongated elements 22a, 22b of the transporting unit 16, are hold in place by retaining elements 18. Therefore even the safety device 12 is hold in place. The guiding unit 24 which is here attached to the manipulator 10, is disposed along said elongated rods 22a, 22b.

Once the fuel assembly 4 has been moved upwardly beyond the safety device 12, said safety device 12 which is now arranged below the fuel assembly 4 is activated, thus said safety device 12 is brought from its first state to its second state (step e)). Therefore the moveable part of the locking device 28 is moved from its first to its second position in order to prevent a passage of the fuel assembly 4 in the second state. In the following the fuel assembly 4 is ready for further handling and a secure transport of the fuel assembly 4 is possible (step f)). Thereby the fuel assembly 4 is moved together and synchronously with the transporting unit 16, the safety device 12 and retaining elements 14, 16.

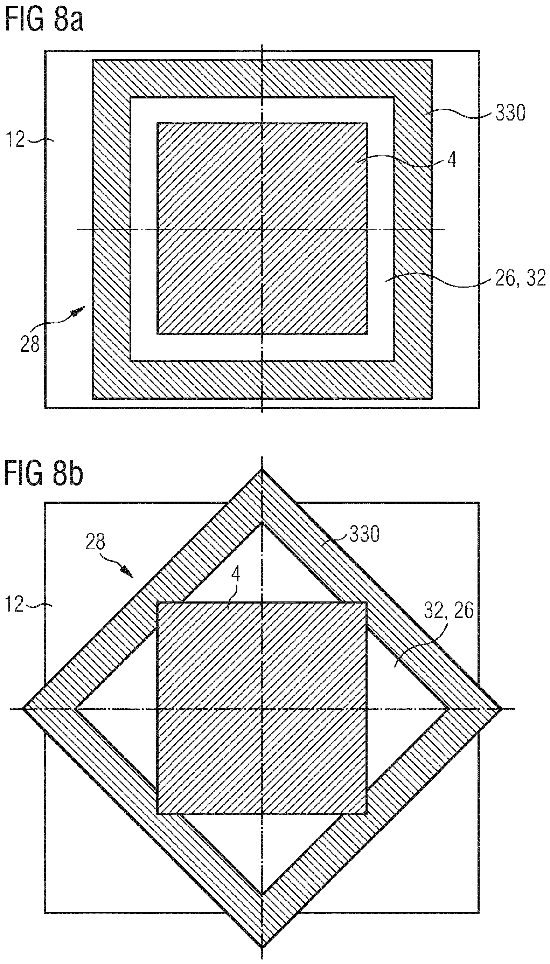

For further illustration of the function of the locking device 28, Fig. 8a and 8b show the locking device 328 according to Fig. 6a to 6c in a simplified schematic manner. The safety device 12 comprises a first opening 26 having a rectangular cross-section and being sized to allow passage of the fuel assembly 4 in a first state, wherein the locking device 28, respectively the moveable part 330, exemplary a plate, is in the first position (Fig. 8a). The opening 26 of the safety device 12 and an opening 32 of the locking device 28, respectively the movable part 330 are aligned in the first state respectively the first position so that vertical movement of the fuel assembly 4 is possible. In order to change the state of the safety device 12 from the first state to the second state (Fig. 8b), the moveable part 330 is rotated at an angle of about 45° to bring it from its first to its second position. During this rotation, the size of the opening 26 of the safety device, respectively the opening 32 of the locking device 26 is not changed, thus a cross-section of the openings remains constant. On the contrary only the alignment of said openings 26, 32 is varied, so that a vertical movement of the fuel assembly 4 is no longer possible.

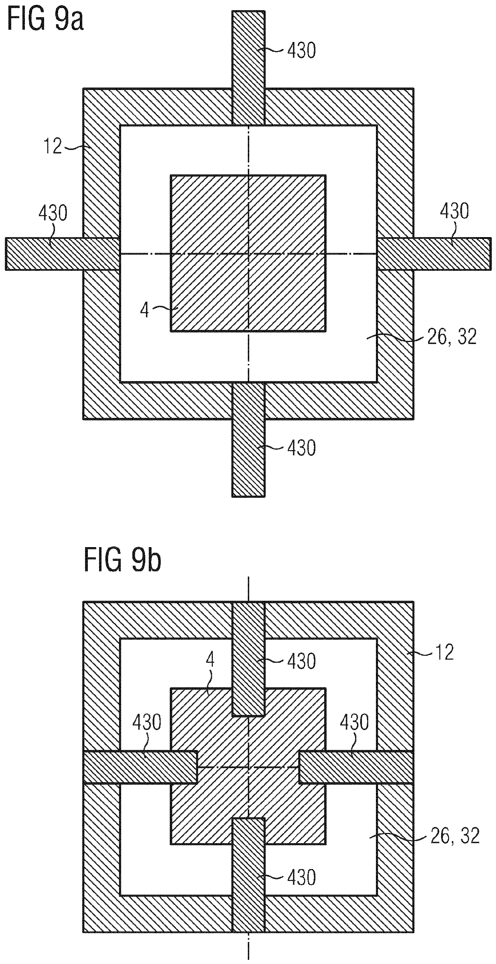

Fig. 9a and 9b illustrate a fourth embodiment of the locking device 428 in a simplified schematic view, wherein according to Fig. 9a, the safety device 12 respectively the locking device is in its first state respectively in its first position and according to Fig. 9b in its second state respectively its second position. The locking device 428 comprises four moveable parts 430, exemplary designed as sliders, each of the sliders being arranged at one side of the safety device 12. The four moveable parts 430 are moved inwardly in a horizontal and linear direction in order to bring them into the second position. Thereby the size of opening 26, respectively 32 is decreased in order to prevent a vertical movement of the fuel assembly 4 in the second state. In other words: The openings 26, 28 are at least partially closed by the moveable parts 430.

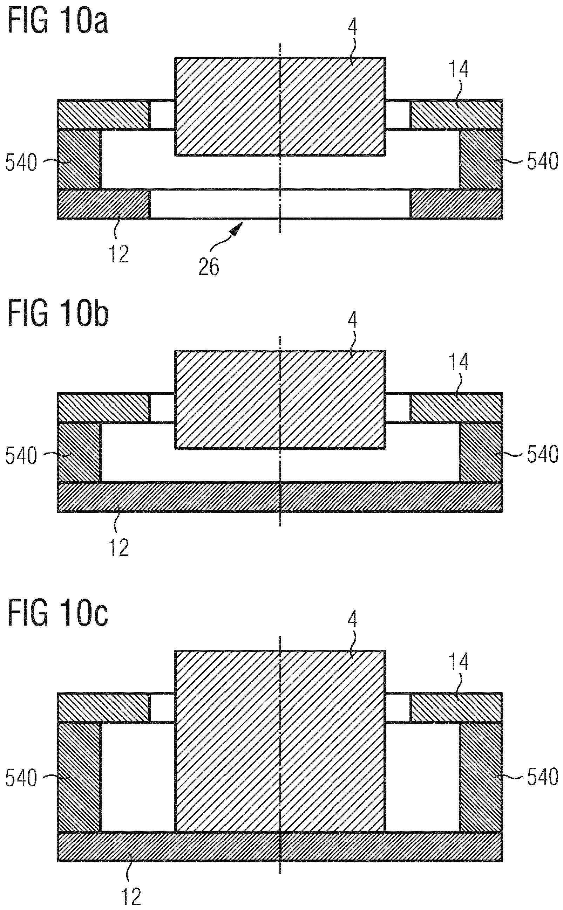

Fig. 10a to 10c show a part of the safety system 2 according to a first solution, namely a safety device 12 and a damping unit, respectively at least one damping element. The damping unit comprises exemplary two first damping elements 540 each being attached to the safety device 12 and the retaining element 14, thus being arranged between the safety device 12 and the retaining element 14 so that they are resiliently coupled with respect to each other. The safety device 12 and the retaining element 14 are exemplary designed as plates that are arranged parallel and spaced apart to each other. According to Fig. 10a, the safety device 12 is in its first state, according to Fig. 10b, the safety device 12 is in its second state, thus the opening 26 cannot be passed by the fuel assembly 4. In case of fall down of the fuel assembly 4, said fuel assembly 4 falls onto the security device 12 as it cannot pass through the opening 26 and its further vertical movement is stopped (see Fig. 10c). The damping elements 540 are loaded and absorb the energy in order to dampen the fall down of the fuel assembly 4 and to prevent further damage.

The load that occurs in case of fall down of a fuel assembly 4 is, depending on the structure of the safety system 2, transferred from the safety device 12 through the transporting unit 16, in particular through the guiding unit 24 and the elongated elements 22a, 22b, and/or the retaining elements 14, 16 into the fuel assembly handling device.

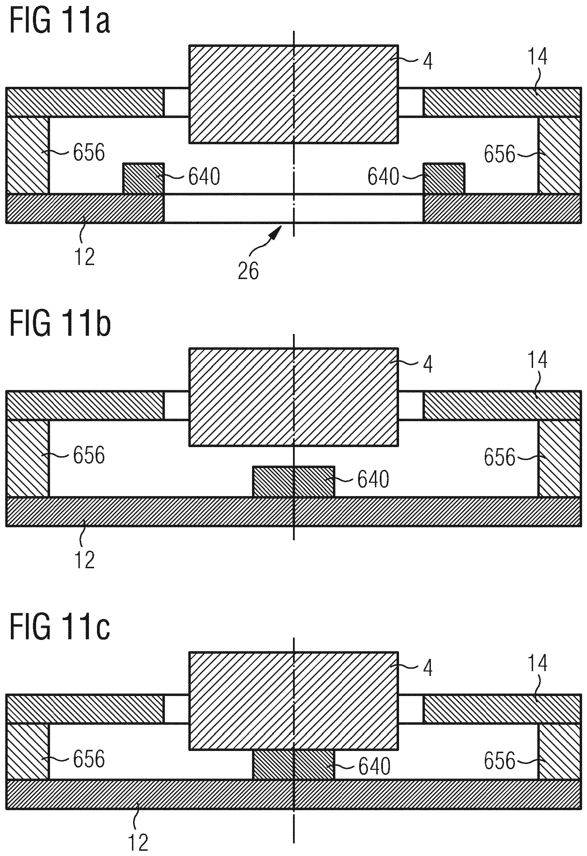

Fig. 11a to 11c show a part of the safety system 2 according to a second solution, namely a safety device 12 and a lifting mechanism 656. The safety system further comprises a damping unit, which comprises exemplary two second damping elements 640 each being only attached to the safety device 12 or the locking device 28 (not shown). The safety device 12 and the retaining element 14 are even here exemplary designed as plates that are arranged parallel and spaced apart to each other. According to Fig. 11a, the safety device 12 is in its first state, according to Fig. 11b, the safety device 12 is in its second state, thus the opening 26 cannot be passed by the fuel assembly 4. The lifting mechanism 656 such as lifting cylinders is attached to the safety device 12 and to the retaining element 14, thus is arranged between them. The lifting mechanism 656 is provided to lift up the safety device 12 in its second state so that the safety device 12, respectively the second damping element 640 is in contact with a lower end of the fuel assembly 4 (Fig. 11c), so that a fall down is prevented. Alternatively, only the distance between the safety device 12, respectively the second damping element 640 and the lower end of the fuel assembly 4 might be reduced by lifting up the safety device 12 in its second state. According to this solution, the height of fall in case of fall down of the fuel assembly 4 is reduced. Therefore nearly no vertical movement of the fuel assembly 4 occurs and the energy resulting from a, here nearly complete prevented fall down of the fuel assembly 4 is absorbed by deformation of the damping element 640.

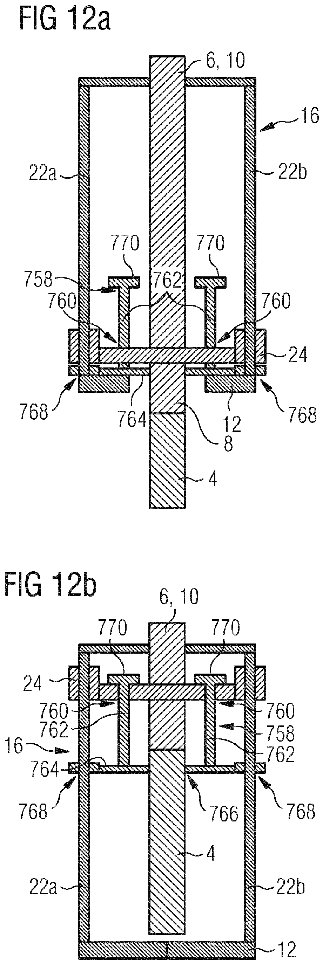

Fig. 12a and 12b show a safety device 12 and a transporting unit 16 according to a first embodiment, wherein the safety device 12 is firstly in the first state (Fig. 12a) and secondly in the second state (Fig. 12b). The transporting unit 16 comprises a guiding unit 24 and a stabilizing element 758, that is provided to prevent tilting of the fuel assembly 4 during the gripping, the vertical movement of the fuel assembly 4 and during the transport. The stabilizing element 758 is attached to the guiding unit 24 and to the two elongated elements 22a, 22b and is provided to be disposed along the two elongated elements 22a, 22b in a vertical direction. Therefore the guiding unit 24 is provided with two openings 760 through which an elongated part 762 of the stabilizing element 758 is led. The stabilizing element 758 comprises a plate-shaped first end portion 764 at its lower end, comprising a central opening 766 for passage of the lower part of the fuel assembly handling device 6, the gripper 8 and the fuel assembly 4. Further openings 768 are provided in an edge region of the end portion 764 in order to guide the stabilizing element 758 during a vertical movement. A second end portion 770 of the stabilizing element 758, respectively two second end portions 770 adjacent to the elongated parts 762 which are protruding from said elongated parts 762 in a horizontal direction, form a form-fit connection with the guiding unit 24 during the transport (see Fig. 12b). The stabilizing element 758 is moved into the position shown in Fig. 12b due to its own weight, the elongated parts 762 which protrude downwardly from the guiding unit 24 and the first end portion 764 secure the fuel assembly 4 against tilting during the transport. Therefore the elongated parts 762 extend thus far downward that the first end portion 764 surrounds the fuel assembly 4.

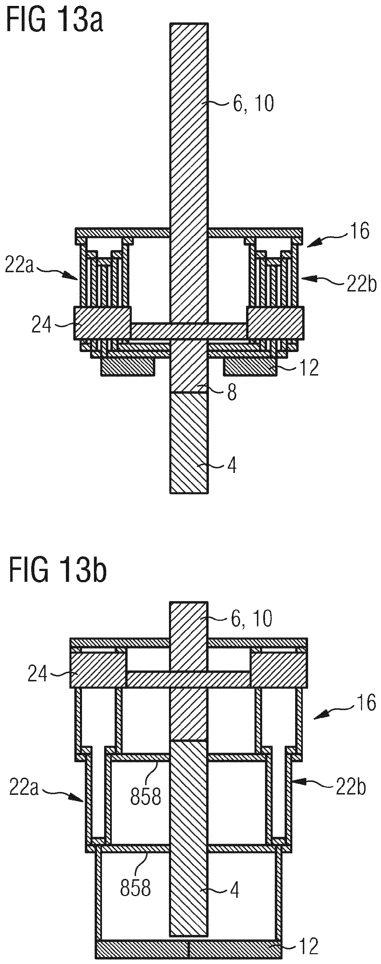

Fig. 13a and 13b show a safety device 12 and a transporting unit 16 according to a second embodiment, wherein the safety device is firstly in the first state (Fig. 13a) and secondly in the second state (Fig. 13b). The two elongated elements 22a, 22b comprise several, exemplary each elongated element 22a, 22b comprises three portions that are telescopically movable into each other. Number and dimensions of the portions of the telescopically designed elongated elements 22a, 22b are depending on accessible size and design of the fuel assembly handling device. An upper portion of the elongated elements 22a, 22b is fixed to the guiding unit 24. In order to stabilize the telescopic transporting unit 16 it comprises stabilizing elements 858, exemplary two stabilizing elements 858 in the form of rings, between each of the portions of the elongated elements 22a, 22b and attached hereto. These stabilizing elements 858 are also provided to be disposed in a vertical direction and to stabilize the transporting unit 16, in particular the elongated elements 22a, 22b. Each of these stabilizing elements 858 is fixed to the portion of the elongated elements 22a, 22b that is attached above said stabilizing element 858 in order to provide an automatically vertical movement of the stabilizing element 858 when the guiding unit 24 is moved. During the transport, the stabilizing elements 858 are therefore automatically positioned at different height of the fuel assembly 4 and therefore prevent tilting of said fuel assembly 4.

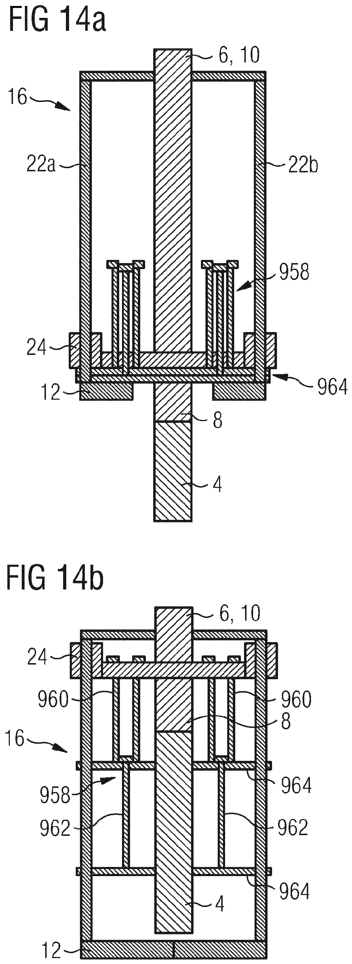

Fig. 14a and 14b show a safety device 12 and a transporting unit 16 according to a third embodiment, wherein the safety device is firstly in the first state (Fig. 14a) and secondly in the second state (Fig. 14b). According to this third embodiment, the transporting unit 16 is constructed as a cage, which may surround the fuel assembly 4 completely during the transport. The stabilizing element 958 comprises several portions 960, 962 that are telescopically moveable into each other and stabilizing rings 964 each being arranged below and attached to said portions 960, 962. Even here, the stabilizing element 958, respectively its portions 960, 962 is attached to the guiding unit 24 and disposable in a vertical direction, the stabilizing rings 964 are attached to the elongated elements 22a, 22b of the transporting unit 16. The stabilizing element 958, in particular its portions 960 are held form-fit at the guiding unit 24 during the transport. The stabilizing element 958, in particular the stabilizing rings 964 are automatically positioned at different height of the fuel assembly 4 and therefore prevent tilting of said fuel assembly 4 during the transport.

The safety system 2 may comprise further emergency unlocking mechanism being provided to activate and/or deactivate the safety device and/or the locking device and/or the damping unit and/or the transporting unit and/or the drive mechanism (not shown). A further advantage of the safety system 2 consists in the fact that all of the components are provided to be mechanically removable by a manipulator, even if the safety system is at least partially under water, for example at least partially within a spent fuel storage rack.

Referring to the abovementioned explanations, different embodiments of each the safety device, the locking device, the damping elements, the lifting mechanism and the transporting unit have been described. A safety system 2 may comprises said several parts in arbitrary combination.

### References

- 2: safety system
- 4: fuel assembly
- 6: fuel assembly handling device
- 8: gripper
- 10: manipulator
- 12: safety device
- 14: first retaining element
- 16: transporting unit
- 18: second retaining element
- 20: drive mechanism
- 20a: bearing structure
- 20b: drive unit
- 20c: drive unit
- 22a,b: elongated elements
- 24: guiding unit
- 26: first opening of the safety device 12
- 28: locking device
- 30: moveable part of the locking device 28
- 30a: rotatable plate
- 31: emergency unlocking mechanism
- 32: second opening of the locking device 18
- 34: shifting mechanics
- 35: return spring
- 36: spring mechanism
- 37: position end switch
- 38: fastening element
- 40: damping element
- 42: screw
- 44: opening of the first retaining element
- 50: spent fuel storage rack
- 128: locking device
- 130a,: 130b moveable part of the locking device 128
- 134a,: 134b shifting mechanic
- 146: rotating joint
- 228: locking device
- 230: moveable part of the locking device 228
- 234: shifting mechanic
- 246: rotatable joint
- 248: rotatable ring
- 328: locking device
- 330: moveable part of the locking device 328
- 334: shifting mechanic
- 350: guiding element
- 352: slit
- 354: guiding element
- 428: locking device
- 430: moveable part of the locking device 428
- 540: first damping element
- 640: second damping element
- 656: lifting mechanism
- 758: stabilizing element
- 760: opening in guiding unit
- 762: elongated part
- 764: first end portion of the stabilizing element 758
- 766: central opening of the stabilizing element 758
- 768: opening of the stabilizing element 758
- 770: second end portion of the stabilizing element 758
- 858: stabilizing element
- 958: stabilizing element
- 960: portion of the stabilizing element
- 962: portion of the stabilizing element
- 964: stabilizing ring
- R_{V}: vertical direction

## Claims

1. Safety system (2) for securing a fuel assembly (4) during a transport with a fuel assembly handling device (6), comprising a safety device (12) being provided to be attached to the fuel assembly handling device (6) and to be arranged below the fuel assembly (4) at least during the transport, wherein the safety device (12) is provided to alternate between a first state and a second state, wherein in the first state a passage of the fuel assembly (4) and/or at least a part of the fuel assembly handling device (6) through the safety device (12) and/or laterally past the safety device (12) is allowed and in the second state a passage of the fuel assembly (4) through the safety device (12) and/or laterally past the safety device (12) is prevented, and further comprising at least one damping element (40, 540, 640) being provided to absorb energy resulting from a fall down of the fuel assembly (4).

2. Safety system (2) according to claim 1, wherein the safety device (12) comprises a first opening (26) sized to allow passage of the fuel assembly (4) and/or the at least one part of the fuel assembly handling device (6) in the first state.

3. Safety system (2) according to any of the claims 1 or 2, further comprising at least one retaining element (14, 18) and/or at least one fastening element (38) for attaching the safety device (12) to a part of the fuel element handling device (6).

4. Safety system (2) according to any one of the preceding claims, wherein the safety device (12) comprises a locking device (28, 128, 228, 328, 428) being arranged at the safety device (12), wherein the locking device (28, 128, 228, 328, 428) comprises at least one moveable part (30, 130a, 130b, 230, 330, 430) being moveable between a first and a second position in order to allow a passage of the fuel assembly (4) and/or at least a part of the fuel assembly handling device (6) through the safety device (12) and/or passing by the safety device (12) in the first state and to prevent a passage of the fuel assembly (4) through the safety device (12) and/or passing by the safety device (12) in the second state.

5. Safety system (2) according to any one of the preceding claims, wherein the at least one damping element (40, 540, 640) is arranged at an upper surface of the safety device (12) or at an upper surface of the locking device (28, 128, 228, 328, 428).

6. Safety system (2) according to any one of the claims 3 to 5, wherein at least one first damping element (40, 540) is attached to the safety device (12) and to at least one of the retaining elements (14), so that the safety device (12) and the at least one retaining element (14) are resiliently coupled with respect to each other.

7. Safety system (2) according to any one of the claims 1 to 6, further comprising a lifting mechanism (656) being provided to lift up the safety device (12) in its second state so that the safety device (12) and/or the at least one damping element (40, 640) is adapted to be in contact with a lower end of the fuel assembly (4) or the distance between the safety device (12) and/or the at least one damping element (40, 640) and the lower end of the fuel assembly (4) is at least reduced.

8. Safety system (2) according to any one of the claims 4 to 7, wherein the at least one moveable part (30, 130a, 130b, 230, 330, 430) is a rotatable plate (30a, 330) said rotatable plate (30a, 330) comprises a second opening (18) sized to allow passage of the fuel assembly (4) and/or at least a part of the fuel assembly handling device (6) in the first position and to prevent passage of the fuel assembly (4) and/or at least a part of the fuel assembly handling device (6) in the second position, whereby the cross-section of the second opening (32) remains constant in the first and the second position.

9. Safety system (2) according to any one of the claims 4 to 8, wherein the at least one moveable part (30, 130b, 230, 430) is provided to increase or decrease a cross-section of the first opening (26), in order to allow passage of the fuel assembly (4) and/or at least a part of the fuel assembly handling device (6) in the first position and to prevent passage of the fuel assembly (4) and/or at least a part of the fuel assembly handling device (6) in the second position.

10. Safety system (2) according to any of the preceding claims, further comprising a transporting unit (16) being detachably fixed to a part of the fuel assembly handling device (6), wherein the safety device (12) and/or at least one of the retaining elements (14, 18) are adapted to said transporting unit (16).

11. Safety system (2) according to claim 10, wherein the transporting unit (16) comprises at least one elongated element (22a, 22b), each having a first end that is attached to the safety device (12) and/or to at least one of the retaining elements (14, 18) and each having a second end, that is attached directly or indirectly to a part of the fuel assembly handling device (6).

12. Safety system (2) according to claim 11, wherein the transporting unit (16) further comprises a guiding unit (24) being attached to a lower end of the fuel assembly handling machine (6), said guiding unit (24) being arranged to be disposed along the at least one elongated element (22a, 22b) in a vertical direction.

## Patentansprüche

1. Sicherheitssystem (2) zum Absichern eines Brennelements (4) während des Transports mit einer Brennelement-Transportvorrichtung (6), umfassend eine Sicherheitsvorrichtung (12), die bereitgestellt ist, um an der Brennelement-Transportvorrichtung (6) befestigt zu sein und mindestens während des Transports unter dem Brennelement (4) angeordnet zu sein, wobei die Sicherheitsvorrichtung (12) bereitgestellt ist, um zwischen einem ersten Zustand und einem zweiten Zustand zu alternieren, wobei im ersten Zustand ein Durchgang des Brennelements (4) und/oder mindestens eines Teils der Brennstoffbündel-Transportvorrichtung (6) durch die Sicherheitsvorrichtung (12) und/oder seitlich an der Sicherheitsvorrichtung (12) vorbei ermöglicht wird, und im zweiten Zustand ein Durchgang des Brennelements (4) durch die Sicherheitsvorrichtung (12) und/oder seitlich an der Sicherheitsvorrichtung (12) vorbei verhindert wird, und weiter umfassend mindestens ein Dämpfungselement (40, 540, 640), das bereitgestellt ist, um Energie zu absorbieren, die sich aus einem Fall des Brennstoffbündels (4) nach unten ergibt.

2. Sicherheitssystem (2) nach Anspruch 1, wobei die Sicherheitsvorrichtung (12) eine erste Öffnung (26) umfasst, die abgemessen ist, um den Durchgang des Brennstoffbündels (4) und/oder mindestens eines Teils der Brennstoffbündel-Transportvorrichtung (6) im ersten Zustand zu ermöglichen.

3. Sicherheitssystem (2) nach einem der Ansprüche 1 bis 2, weiter umfassend mindestens ein Rückhalteelement (14, 18) und/oder mindestens ein Befestigungselement (38), um die Sicherheitsvorrichtung (12) an einen Teil der Brennstoffbündel-Transportvorrichtung (6) zu befestigen.

4. Sicherheitssystem (2) nach einem der vorhergehenden Ansprüche, wobei die Sicherheitsvorrichtung (12) eine Verriegelungsvorrichtung (28, 128, 228, 328, 428) umfasst, die an der Sicherheitsvorrichtung (12) angeordnet ist, wobei die Verriegelungsvorrichtung (28, 128, 228, 328, 428) mindestens einen beweglichen Teil (30, 130a, 130b, 230, 330, 430) umfasst, der zwischen einer ersten und einer zweiten Position beweglich ist, um den Durchgang des Brennstoffbündels (4) und/oder mindestens eines Teils der Brennstoffbündel-Transportvorrichtung (6) durch die Sicherheitsvorrichtung (12) und /oder an der Sicherheitsvorrichtung (12) vorbei im ersten Zustand zu ermöglichen, und um einen Durchgang des Brennstoffbündels (4) durch die Sicherheitsvorrichtung (12) und /oder an der die Sicherheitsvorrichtung (12) vorbei im zweiten Zustand zu verhindern.

5. Sicherheitssystem (2) nach einem der vorhergehenden Ansprüche, wobei mindestens ein Dämpfungselement (40, 540, 640) auf einer oberen Fläche der Sicherheitsvorrichtung (12) oder an einer oberen Fläche der Verriegelungsvorrichtung (28, 128, 228, 328, 428) angeordnet ist.

6. Sicherheitssystem (2) nach einem der Ansprüche 3 bis 5, wobei mindestens ein erstes Dämpfungselement (40, 540) an die Sicherheitsvorrichtung (12) und an mindestens eines der Rückhalteelemente (14) befestigt ist, so dass die Sicherheitsvorrichtung (12) und dass mindestens eine Rückhalteelement (14) elastisch mit Bezug aufeinander gekoppelt sind.

7. Sicherheitssystem (2) nach einem der Ansprüche 1 bis 6, weiter umfassend einen Hebemechanismus (656), der bereitgestellt ist, um die Sicherheitsvorrichtung (12) in ihren zweiten Zustand zu heben, so dass die Sicherheitsvorrichtung (12) und/oder mindestens ein Dämpfungselement (40, 640) ausgelegt ist, um mit einem unteren Ende des Brennelements (4) in Kontakt zu sein, oder die Distanz zwischen der Sicherheitsvorrichtung (12) und/oder dem mindestens einen Dämpfungselement (40, 640) und dem unteren Ende des Brennelements (4) mindestens reduziert ist.

8. Sicherheitssystem (2) nach einem der Ansprüche 4 bis 7, wobei der mindestens eine bewegliche Teil (30, 130a, 130b, 230, 330, 430) eine drehbare Platte (30a, 330) ist, wobei die drehbare Platte (30a, 330) eine zweite Öffnung (18) umfasst, die abgemessen ist, um den Durchgang des Brennstoffbündels (4) und/oder mindestens einen Teils der Brennstoffbündel-Transportvorrichtung (6) in der ersten Position zu ermöglichen und um den Durchgang des Brennstoffbündels (4) und/oder mindestens eines Teils der Brennstoffbündel-Transportvorrichtung (6) in der zweiten Position zu verhindern, wodurch der Querschnitt der zweiten Öffnung (32) in der ersten und zweiten Position konstant bleibt.

9. Sicherheitssystem (2) nach einem der Ansprüche 4 bis 8, wobei der mindestens eine bewegliche Teil (30, 130b, 230, 430) bereitgestellt ist, um einen Querschnitt der ersten Öffnung (26) zu erhöhen oder zu verringern, um den Durchgang des Brennstoffbündels (4) und/oder mindestens eines Teils der Brennstoffbündel-Transportvorrichtung (6) in der ersten Position zu ermöglichen und um den Durchgang des Brennstoffbündels (4) und/oder mindestens eines Teils der Brennstoffbündel-Transportvorrichtung (6) in der zweiten Position zu verhindern.

10. Sicherheitssystem (2) nach einem der vorhergehenden Ansprüche, weiter umfassend eine Transporteinheit (16), die entfernbar an einen Teil der Brennelement-Transportvorrichtung (6) befestigt ist, wobei die Sicherheitsvorrichtung (12) und/oder mindestens eines der Rückhalteelemente (14, 18) an die Transporteinheit (16) angepasst sind.

11. Sicherheitssystem (2) nach Anspruch 10, wobei die Transporteinheit (16) mindestens ein längliches Element (22a, 22b) umfasst, jeweils aufweisend ein erstes Ende, das an die Sicherheitsvorrichtung (12) und/oder mindestens eines der Rückhalteelemente (14, 18) befestigt ist, und wobei jedes ein zweites Ende aufweist, das direkt oder indirekt an einen Teil der Brennelement-Transportvorrichtung (6) befestigt ist.

12. Sicherheitssystem (2) nach Anspruch 11, wobei die Transporteinheit (16) weiter eine Führungseinheit (24) umfasst, die an ein unteres Ende der Brennelement-Transportvorrichtung (6) befestigt ist, wobei die Führungseinheit (24) angeordnet ist, um entlang dem mindestens einen länglichen Element (22a, 22b) in einer vertikalen Richtung angeordnet zu sein.

## Revendications

1. Système de sécurité (2) permettant de fixer un assemblage de combustible (4) pendant un transport avec un dispositif de manipulation d'assemblage de combustible (6), comprenant un dispositif de sécurité (12) qui est prévu pour être fixé au dispositif de manipulation d'assemblage de combustible (6) et pour être agencé sous l'assemblage de combustible (4) au moins pendant le transport, dans lequel le dispositif de sécurité (12) est prévu pour alterner entre un premier état et un second état, dans lequel, dans le premier état, un passage de l'assemblage de combustible (4) et/ou d'au moins une partie du dispositif de manipulation d'assemblage de combustible (6) à travers le dispositif de sécurité (12) et/ou latéralement au-delà le dispositif de sécurité (12) est autorisé et, dans le second état, un passage de l'assemblage de combustible (4) à travers le dispositif de sécurité (12) et/ou latéralement au-delà le dispositif de sécurité (12) est interdit, et comprenant en outre au moins un élément d'amortissement (40, 540, 640) qui est prévu pour absorber l'énergie résultant d'une chute de l'assemblage de combustible (4).

2. Système de sécurité (2) selon la revendication 1, dans lequel le dispositif de sécurité (12) comprend une première ouverture (26) dimensionnée pour autoriser le passage de l'assemblage de combustible (4) et/ou de l'au moins une partie du dispositif de manipulation d'assemblage de combustible (6) dans le premier état.

3. Système de sécurité (2) selon l'une quelconque des revendications 1 et 2, comprenant en outre au moins un élément de retenue (14, 18) et/ou au moins un élément de fixation (38) permettant de fixer le dispositif de sécurité (12) à une partie du dispositif de manipulation d'assemblage de combustible (6).

4. Système de sécurité (2) selon l'une quelconque des revendications précédentes, dans lequel le dispositif de sécurité (12) comprend un dispositif de verrouillage (28, 128, 228, 328, 428) qui est agencé sur le dispositif de sécurité (12), dans lequel le dispositif de verrouillage (28, 128, 228, 328, 428) comprend au moins une partie mobile (30, 130a, 130b, 230, 330, 430) qui est mobile entre une première et une seconde position afin d'autoriser un passage de l'assemblage de combustible (4) et/ou d'au moins une partie du dispositif de manipulation d'assemblage de combustible (6) à travers le dispositif de sécurité (12) et/ou passant à proximité du dispositif de sécurité (12) dans le premier état et d'interdire un passage de l'assemblage de combustible (4) à travers le dispositif de sécurité (12) et/ou passant à proximité du dispositif de sécurité (12) dans le second état.

5. Système de sécurité (2) selon l'une quelconque des revendications précédentes, dans lequel l'au moins un élément d'amortissement (40, 540, 640) est agencé sur une surface supérieure du dispositif de sécurité (12) ou sur une surface supérieure du dispositif de verrouillage (28, 128, 228, 328, 428).

6. Système de sécurité (2) selon l'une quelconque des revendications 3 à 5, dans lequel au moins un premier élément d'amortissement (40, 540) est fixé au dispositif de sécurité (12) et à au moins un des éléments de retenue (14), de sorte que le dispositif de sécurité (12) et l'au moins un élément de retenue (14) sont couplés de façon élastique l'un à l'autre.

7. Système de sécurité (2) selon l'une quelconque des revendications 1 à 6, comprenant en outre un mécanisme de levage (656) qui est prévu pour soulever le dispositif de sécurité (12) dans son second état de sorte que le dispositif de sécurité (12) et/ou l'au moins un élément d'amortissement (40, 640) sont adaptés pour être en contact avec une extrémité inférieure de l'assemblage de combustible (4) ou que la distance entre le dispositif de sécurité (12) et/ou l'au moins un élément d'amortissement (40, 640) et l'extrémité inférieure de l'assemblage de combustible (4) est au moins réduite.

8. Système de sécurité (2) selon l'une quelconque des revendications 4 à 7, dans lequel l'au moins une partie mobile (30, 130a, 130b, 230, 330, 430) est une plaque rotative (30a, 330), ladite plaque rotative (30a, 330) comprend une seconde ouverture (18) dimensionnée pour autoriser le passage de l'assemblage de combustible (4) et/ou d'au moins une partie du dispositif de manipulation d'assemblage de combustible (6) dans la première position et pour interdire le passage de l'assemblage de combustible (4) et/ou d'au moins une partie du dispositif de manipulation d'assemblage de combustible (6) dans la seconde position, moyennant quoi une section transversale de la seconde ouverture (32) reste constante dans la première et la seconde position.

9. Système de sécurité (2) selon l'une quelconque des revendications 4 à 8, dans lequel l'au moins une partie mobile (30, 130b, 230, 430) est prévue pour augmenter ou diminuer une section transversale de la première ouverture (26), afin d'autoriser le passage de l'assemblage de combustible (4) et/ou d'au moins une partie du dispositif de manipulation d'assemblage de combustible (6) dans la première position et d'interdire le passage de l'assemblage de combustible (4) et/ou d'au moins une partie du dispositif de manipulation d'assemblage de combustible (6) dans la seconde position.

10. Système de sécurité (2) selon l'une quelconque des revendications précédentes, comprenant en outre une unité de transport (16) qui est fixée de manière amovible à une partie du dispositif de manipulation d'assemblage de combustible (6), dans lequel le dispositif de sécurité (12) et/ou au moins un des éléments de retenue (14, 18) sont adaptés à ladite unité de transport (16).

11. Système de sécurité (2) selon la revendication 10, dans lequel l'unité de transport (16) comprend au moins un élément allongé (22a, 22b), chacun ayant une première extrémité qui est fixée au dispositif de sécurité (12) et/ou à au moins un des éléments de retenue (14, 18) et chacun ayant une seconde extrémité, qui est fixée directement ou indirectement à une partie du dispositif de manipulation d'assemblage de combustible (6).

12. Système de sécurité (2) selon la revendication 11, dans lequel l'unité de transport (16) comprend en outre une unité de guidage (24) qui est fixée à une extrémité inférieure de la machine de manipulation d'assemblage de combustible (6), ladite unité de guidage (24) étant agencée de manière à être disposée le long de l'au moins un élément allongé (22a, 22b) dans une direction verticale.
